Europäisches Patentamt

European Patent Office

Office européen des brevets

(11) Numéro de publication : **0 471 097 B1**

(12) # FASCICULE DE BREVET EUROPEEN

(45) Date de publication du fascicule du brevet :
**29.09.93 Bulletin 93/39**

(51) Int. Cl.[5] : **A23B 4/00, A23B 4/044,**
**A23B 4/005, A23L 1/311,**
**A23L 1/315**

(21) Numéro de dépôt : **90115514.3**

(22) Date de dépôt : **13.08.90**

(54) **Procédé de production d'une viande cuite déshydratée.**

(43) Date de publication de la demande :
**19.02.92 Bulletin 92/08**

(45) Mention de la délivrance du brevet :
**29.09.93 Bulletin 93/39**

(84) Etats contractants désignés :
**AT BE CH DE DK ES FR GB GR IT LI LU NL SE**

(56) Documents cités :
**GB-A- 2 116 818**
**US-A- 3 906 115**

(56) Documents cités :
**JOURNAL OF THE SCIENCE OF FOOD & AGRI-**
**CULTURE, vol. 43, no. 4, 1988, pages 355-359,**
**Barking, Essex, GB; N. NARAYAN PRASAD et**
**al.: "Effect of Processing and Storage on the**
**Protein Quality of Precooked Dehydrated Mut-**
**ton Mince"**
**PATENT ABSTRACTS OF JAPAN, vol. 11, no.**
**290(C-447)(2737), 18 septembre 1987; & JP-**
**A-6283841**

(73) Titulaire : **SOCIETE DES PRODUITS NESTLE**
**S.A.**
**Case postale 353**
**CH-1800 Vevey (CH)**

(72) Inventeur : **Cadet, Michel**
**Rue de la Libération 131**
**F-60530 Le Mesnil en Thelle (FR)**

Jouve, 18, rue Saint-Denis, 75001 PARIS

**Description**

La présente invention est relative à un procédé de production d'une viande cuite déshydratée.

On connaît des procédés dans lesquels une viande est cuite en autoclave, le produit obtenu étant éventuellement désossé si nécessaire, puis préséché dans une étuve sous vide partiel pour être ensuite granulé et déshydraté totalement.

Les inconvénients de ce type de procédés sont principalement liés au fait qu'il est nécessaire de présécher la viande cuite pendant plusieurs heures, il est ainsi courant de devoir présécher la viande pendant 5 heures, de plus, malgré ce préséchage, il est en outre nécessaire d'ajouter au produit préséché un liant, qui peut être constitué de blanc d'oeuf, pour permettre ensuite une granulation correcte avant séchage définitif.

La présente invention a donc pour but de fournir un procédé de production d'une viande cuite déshydratée qui permette d'une part de réduire substantiellement le temps de préséchage et, d'autre part, de supprimer éventuellement l'utilisation d'un liant.

La présente invention a ainsi pour objet un procédé de production d'une viande cuite déshydratée dans lequel la viande est cuite dans de la graisse animale jusqu'à présenter un taux de matière sèche supérieur à 60%, puis cette viande est préséchée pour être enfin granulée et déshydratée.

Grâce à la cuisson dans la graisse animale il est possible, avec des temps de cuisson comparables à ceux de l'art antérieur, d'obtenir un produit intermédiaire qui ne nécessite plus qu'un temps de préséchage beaucoup plus court pour permettre ensuite une granulation correcte.

Par ailleurs, il est possible de supprimer totalement l'utilisation du liant.

De plus, il est possible par le procédé selon l'invention d'obtenir une viande cuite séchée présentant des qualités bactériologiques exceptionnelles.

Enfin, si on réalise la cuisson en autoclave sans couvercle dans une graisse provenant d'un animal de la même espèce que celui d'où provient la viande à cuire, il est possible d'obtenir une graisse confite qui, tout en présentant d'excellentes qualités de conservation, présente un léger goût de rôti qui est organoleptiquement tout à fait satisfaisant et remarquable.

Les autres caractéristiques et avantages ressortiront au, cours de la description qui va suivre.

Dans le procédé selon l'invention, le terme viande recouvre les viandes de volailles, telle que les poulets ou les poules, les viandes de boeuf, ainsi que le porc ou le veau.

La matière première mise en oeuvre peut être fraîche ou congelée.

Si la viande est congelée, elle peut être décongelée, par exemple en continu dans un tunnel à air chaud ou à microondes.

Dans la mise en oeuvre du procédé selon l'invention la viande peut, préalablement à la cuisson, avoir été débarrassée de tout ou partie de ses os et de sa peau.

La viande peut aussi avoir été découpée, par exemple en morceaux de quelques centaines de grammes à quelques kilogrammes, afin d'accélérer le processus de cuisson.

La viande, ainsi que la graisse de cuisson, sont placées dans une autoclave sans couvercle à double enveloppe. Le mélange peut être cuit, pendant 40 à 120 minutes, à une température de 100°C à 120°C, sous une pression atmosphérique.

Préférablement la graisse de cuisson peut être stabilisée avec un antioxydant tel que du butyl hydroxy anisol (BHA) ou de l'octyl gallate. Une fois la cuisson réalisée, la viande est séparée de la graisse de cuisson, par exemple par simple égouttage.

Le produit peut ensuite être broyé, par exemple par un hachoir à vis hélicoïdale avec une grille qui peut présenter des trous de 9 mm.

Si nécessaire, le produit est ensuite désossé. A ce stade des additifs peuvent être ajoutés tels que du sel fin ou des herbes aromatiques, de même un liant, tel que du blanc d'oeuf, peut être incorporé au mélange.

Ensuite le produit peut être préséché en étuve sous vide à plaques chauffantes sous une pression résiduelle de 30 mm Hg à 98°C, pendant une durée inférieure à 2 h. Ensuite le produit est granulé, par exemple par un hachoir pour produire des morceaux de quelques millimètres.

Enfin, le produit subit une déshydratation finale jusqu'à un taux de matières sèches supérieur à 95% en poids, cette déshydratation finale pouvant être réalisée dans une étuve à plaques chauffantes sous vide partiel pendant quelques heures.

Les exemples ci-après illustrent l'invention. Dans ces exemples, les pourcentages sont exprimés en poids.

Exemple 1 :

Des cous de poule congelés ont été décongelés.

270 kg de cous de poule et 520 kg de graisse de poule, stabilisée avec du BHA et de l'octyl gallate, ont été cuits à 105°C pendant 75 minutes dans une autoclave sans couvercle à pression atmosphérique.

Il a été ainsi obtenu 139 kg de viande, présentant un taux de matières sèches de 70%, et 499 kg de graisse non raffinée, une partie de la graisse de cuisson ayant migré dans les cous de poule.

Cette graisse confite a été raffinée par chauffage à 110°C pendant 30 minutes en donnant ainsi 494 kg de graisse raffinée. Les 139 kg de viande ont été broyés dans un hachoir à vis hélicoïdale muni d'une grille présentant des trous de 9 mm de diamètre. Le produit broyé a été ensuite désossé mécaniquement en produisant 85 kg de viande désossée.

Les 85 kg de viande désossée ont été séparés en deux lots de 42,5 kg chacun.

A un premier lot de 42,5 kg ont été ajoutés 5,100 kg de sel fin et 5 g de romarin en poudre.

Un test de granulation, par un hachoir à grille d'une épaisseur de 10 mm avec des trous de 3 mm de diamètre, a été réalisé, la tenue des granulés était médiocre.

Après un préséchage en étuve sous vide à plaques chauffantes, pendant une heure à 98°C à une pression résiduelle de 5260 Pa, le produit a été granulé par passage dans un hachoir du type ayant servi à faire le test de granulation avant le préséchage.

Cette fois-ci, la granulation s'est réalisée sans problème, plus particulièrement il n'est pas apparu de prise en masse des granulés obtenus. Le produit a ensuite été déshydraté dans une étuve sous vide partiel de 5260 Pa à 98°C pendant 2 h 30 minutes.

Il a ainsi été obtenu 34 kg de granulés à un taux de matières sèches de 98,5%.

Exemple 2 :

Le deuxième lot de 42,5 kg obtenu à partir des 85 kg produits dans l'exemple 1 a été additionné de 5,800 kg de sel fin, de 5 g de romarin en poudre et de 600 g de blanc d'oeuf en poudre.

Un test de granulation sur le produit obtenu a été réalisé, là encore la tenue des granulés était médiocre.

En revanche, après un préséchage identique à celui réalisé dans l'exemple 1, la granulation s'est déroulée sans problème. Le produit a ensuite subi une déshydratation finale identique à celle de l'exemple 1. Il a été ainsi obtenu 34 kg de granulés à un taux de matières sèches de 98,3%.

Exemple 3 :

Des poules entières éviscérées sans les pattes ni le bout des ailerons ont été décongelées.

252 kg de poule et 550 kg de graisse de poule, stabilisée avec du BHA et de l'octyl gallate, ont été cuits à 110°C pendant 75 minutes dans une autoclave sans couvercle à pression atmosphérique.

Il a été ainsi obtenu 133,5 kg de viande, présentant un taux de matières sèches de 64%, et 565 kg de graisse non raffinée, une partie de la graisse des poules cuites ayant migré dans la graisse de cuisson.

Cette graisse confite a été raffinée à 110°C pendant 30 minutes en produisant 560 kg de graisse raffinée.

Les 137,5 kg de viande cuite ont été broyés dans un hachoir à vis hélicoïdale muni d'une grille présentant des trous de 9 mm de diamètre.

Le produit broyé a été ensuite désossé mécaniquement en produisant 103 kg de viande désossée.

Ces 103 kg de viande désossée ont été séparés en deux lots de 51,500 kg chacun.

A un premier lot de 51,5 kg ont été additionné 7,000 kg de sel fin et 6 g de romarin en poudre.

Un test de granulation identique à celui réalisé aux exemples 1 et 2 a encore mis en évidence une tenue insuffisante.

Après un préséchage en étuve sous vide à plaques chauffantes pendant une heure à une température de 98°C, à une pression résiduelle de 5260 Pa, le produit a été granulé par passage dans un hachoir identique à celui utilisé dans les exemples 1 et 2.

La granulation s'est réalisée sans problème.

Le produit a ensuite subi une dernière déshydratation dans une étuve sous vide partiel de 5260 Pa, pendant 2 h 30 minutes, à 98°C.

Il a été ainsi obtenu 37 kg de granulés à un taux de matières sèches de 97,2%.

Exemple 4 :

Le deuxième lot de 51,5 kg issu des 103 kg produits dans l'exemple 2 a été additionné de 7 kg de sel fin, 820 g de blanc d'oeuf en poudre et 6 g de romarin en poudre.

Un test de granulation sur le produit obtenu a été réalisé, là encore la tenue des granulés était insuffisante.

En revanche, après un préséchage identique à celui réalisé dans les exemples 1, 2 et 3, la granulation s'est déroulée sans problème.

Le produit a ensuite subi une déshydratation finale identique à celle réalisée dans les exemples 1,2,3.

Il a été ainsi obtenu 38 kg de granulés à un teneur en matières sèches de 97,55%.

Par ailleurs, les études bactériologiques réalisées ont montré que les qualités des produits obtenus étaient excellentes.

Ces études bactériologiques sont résumées dans le tableau ci-dessous.

| | VIANDE DE COUS | | VIANDE DE POULES | |
|---|---|---|---|---|
| | Exemple 1 | Exemple 2 | Exemple 3 | Exemple 4 |
| Germes totaux/g (norme 10 000) | 30 | 60 | 760 | 60 |
| Coliformes totaux/g | < 1 | < 1 | < 1 | < 1 |
| Coliformes fécaux/g | < 1 | < 1 | < 1 | < 1 |
| Escherichia coli./g | < 1 | < 1 | < 1 | < 1 |
| Staphylocoques/g | < 1 | < 10 | < 1 | < 1 |
| Clostridium sulfito-réducteur/g | < 1 | < 1 | < 1 | < 1 |
| Levures/g | < 10 | < 10 | < 10 | < 10 |
| Moisissures/g | < 10 | < 10 | < 10 | < 10 |

Or outre la comparaison de l'exemple 1, respectivement l'exemple 3, avec l'exemple 2, respectivement l'exemple 4, montre bien que le préséchage réalisé est à lui seul beaucoup plus efficace que l'addition d'un liant éventuel.

L'exemple comparatif suivant montre que le temps de préséchage nécessaire avec le procédé selon l'invention est bien inférieur à celui nécessaire dans l'art antérieur.

Exemple comparatif :

Le tableau ci-dessous illustre le procédé de l'art antérieur appliqué, d'une part, à des cous de poulets, d'autre part à des poulets entiers.

| | Cous de poulets | Poulets entiers |
|---|---|---|
| Volume de départ (kg) | 300 | 300 |
| Cuisson en autoclave | | |
| - Pression (bar) | 1,3 | 1,7 |
| - Durée (minutes) | 65 | 40 |
| - Température (°C) | 125 | 130 |
| Matières sèches après cuisson (%) | 38 | 45 |
| Blanc d'oeufs (kg) | 3 | 3 |
| Préséchage | | |
| - Pression (bar) | 50 | 50 |
| - Température (°C) | 95 | 95 |
| - Temps (h) | 4,5 | 4,5 |
| Granulation (mm) | 3 | 3 |
| Séchage | | |
| - Pression (bar) | 50 | 50 |
| - Température (°C) | 95 | 95 |
| - Durée (h) | 2,75 | 2,75 |

Il apparaît nettement que le temps de préséchage passe de 4,5 h à une heure et qu'il n'est plus nécessaire d'utiliser de blanc d'oeuf.

**Revendications**

1. Procédé de production de viande cuite déshydratée dans lequel la viande est cuite dans de la graisse animale jusqu'à atteindre un taux de matières sèches d'au moins 60% en poids, puis est préséchée en étuve sous vide partielle avant d'être granulée et de subir une déshydratation finale.

2. Procédé selon la revendication 1 caractérisé en ce que la cuisson est réalisée entre 100°C et 120°C à pression atmosphérique.

3. Procédé selon la revendication 2 caractérisé en ce que la cuisson est réalisée pendant 40 à 120 minutes.

**Patentansprüche**

1. Verfahren zur Herstellung von gegartem dehydratisiertem Fleisch, in dem Fleisch in tierischem Fett bis zu einem Trokkensubstanzgehalt von wenigstens 60 Gew.-% gegart und dann im Ofen unter Teilvakuum vorgetrocknet wird, bevor es granuliert und einer Enddehydratisierung unterzogen wird.

2. Verfahren nach Anspruch 1, dadurch gekennzeichnet, daß die Garung bei atmosphärischem Druck zwischen 100°C und 120°C durchgeführt wird.

3. Verfahren nach Anspruch 2, dadurch gekennzeichnet, daß die Garung 40 bis 120 Minuten lang durchgeführt wird.

**Claims**

1. A process for the production of dehydrated cooked meat, in which the meat is cooked in animal fat to a dry matter content of at least 60% by weight and is then predried in an oven under a partial vacuum before being granulated and subjected to final dehydration.

2. A process as claimed in claim 1, characterized in that cooking is carried out at atmospheric pressure between 100°C and 120°C.

3. A process as claimed in claim 2, characterized in that cooking is carried out for 40 to 120 minutes.